# EUROPEAN PATENT SPECIFICATION

(11) **EP 0 434 964 B1**
(45) Date of publication and mention of the grant of the patent: **13.04.1994**
(21) Application number: 90122057.4
(22) Date of filing: 19.11.1990
(51) Int. Cl.: H02B 1/20

(54) **A set of assembly elements intended to facilitate concurrent electrical connection of a plurality of modular automatic circuit breakers**
Bauelementensatz zum gleizeitigen elektrischen Verbinden einer Mehrzahl von modularen Selbstschaltern
Ensemble d'éléments de construction pour aider la connexion électrique simultanée de plusieurs interrupteurs automatiques modulaires

(30) Priority: 27.11.1989 IT 2251689; 27.11.1989 IT 2215689 U
(43) Date of publication of application: 03.07.1991
(73) Proprietor: BTICINO S.P.A., 20122 Milano (IT)
(72) Inventor: Fabrizi, Fabrizio, I-24100 Bergamo (IT); Pianezzola, Sergio, I-21100 Calcinate del Pesce (IT)
(74) Representative: Perani, Aurelio

(56) References cited:
- EP-A- 0 327 385
- FR-A- 2 621 426
- GB-A- 696 340

## Description

This invention relates to a circuit breaker assembly intended to facilitate concurrent electrical connection of a plurality of modular automatic circuit breakers installed into a package on a rail, with a rear face facing said rail in a supply and protection station for an electric system and being each provided with at least one input and output terminal connector for connection to electric cables of said electric system.

As is known, electric supply systems are led to circuit breakers and stations of the above-mentioned kind both in civil and industrial environments.

Such stations, which are usually flush-mounted, comprise a box-type case with a lid or cover, wherein the circuit breakers fit by snap action on a rail, e.g. a DIN sectional member.

Each breaker is provided, of course, with at least one input terminal, and corresponding output terminal, for connection to respective ends of electric system cables.

Modular breakers of this kind enable supply stations to be assembled in an orderly and compact fashion. However, where space is at a premium inside the station, the installer invariably encounters considerable difficulties in connecting the breakers together as well as in connecting the various electric cable ends to their respective breakers.

In fact, many electric cables are usually led to such a station which crowd in the limited space available, thus making for difficult identification, as well as completion, of the connections involved.

To obviate this problem, it has been proposed of using a bus bar, basically configured comb-like with tooth inserted and clamped in corresponding terminals of the various breakers.

This approach, while making the concurrent connection of plural breakers easier, has a serious drawback in that any connection or servicing operation is specially laborious, to the point that a breaker cannot be replaced without releasing each of the "tooth" from their corresponding terminals.

An example of such approach is disclosed in EP-A-0327385 where a conductive bus bar, having comb like teeth, is supported by the rail intended for circuit breakers snap-fit installation in such a way that each tooth fits in a blind hole housing a terminal connector of a breaker, is received into the connector and secured thereto by tightening a screw which operates on the connector to clamp together the tooth and the connector.

In the disclosed approach in order to replace a breaker, there is no need to release each of the teeth from their corresponding terminals, but still the tooth engaged in the breaker to be replaced has to be released and further the breaker, in order to the removed, needs to be rotated of a substantive amount and lifted of a substantive amount as to the installation position, in order to clear the tooth from the blind of the breaker.

This rotation and lifting cannot be easily performed and does not reconcile with the limited space available for housing the breakers and the electrical cables to be connected thereto.

It may also be noted that the conductive bus bar extends on one side of the breakers (or below/above the breakers), having regard to their custamary wall flush installation, which imposes an additional housing space for the conductive bus bar.

The technical problem that underlies this invention is to provide a circuit breaker assembly having such structural and functional characteristics as to facilitate concurrent electrical connection of a plurality of modular circuit breakers, as pre-installed into a package on a rail of an electric power supply station, as well as enabling each breaker to be readily removed individually.

This problem is solved by a circuit breaker assembly as specified above being characterized in that it comprises a bar made of an electrically conductive material, having a plurality of connection plugs perpendicular to said bar and to said rear face and a socked in each breaker for receiving one of said plugs, each said socked being electrically connected to one of said input and output terminal connectors and being open on said breaker rear face.

The features and advantages of the assembly according to the invention will be appreciated from the following detailed description of an embodiment thereof, given by way of illustration and not of limitation with reference to the accompanying drawings.

In the drawings:
Figure 1 is an exploded prospective view of the assembly according to the invention;
Figure 2 is a vertical elevation view in cross-section of a supply station incorporating the assembly shown in Figure 1; and
Figure 3 is a perspective detail view of an assembly element shown in Figure 1.

With reference to the drawing views, generally and schematically shown at 1 is an assembly facilitating concurrent electrical connection of a number of automatic circuit breakers 3.

The breakers 3 are each enclosed within a respective box-type case 4 of modular design having standard shape and size universally referred to as DIN module.

The breakers 3 are modularly installed package-fashion in an electric system supply and protection station 2.

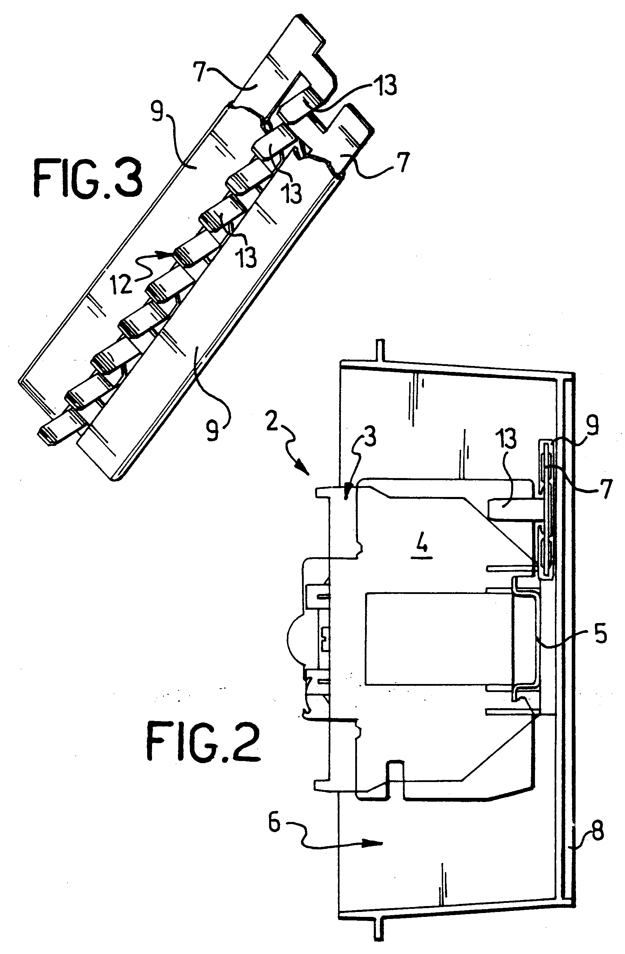

The station 2 is of a flush-mounted type and comprises a box-type case 6, shown in section in Figure 2. This case 6 has a back wall 8 whereto a rail 5, such as of the kind referred to as DIN sectional member, is attached to lie longitudinally at a near-central location.

The breakers 3 are snap fit on the rail 5, one beside another within the case 6, a breaker rear face facing the rail 5 and the case back wall 8.

Each breaker has at least one input terminal 10 with a respective clamp screw 18, and a corresponding output terminal (not shown) for electric connection to the free ends of electric system cables.

Advantageously, according to the invention, the set 1 includes a plate-like bar 7 made of an electrically conductive material and having a plurality of blades or reed contacts 13 formed integrally therewith and jutting out perpendicularly from the bar into a substantially rake-like.

Provided on each breaker 3, that is on each module 4, is further at least one fork contact 15 received at a location close to the input terminal 10 and connected electrically thereto.

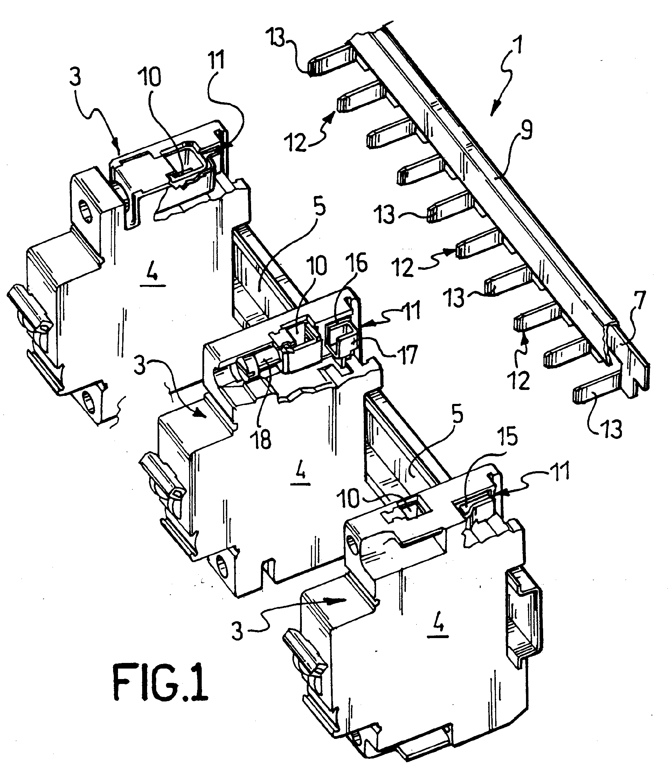

Each of the fork contacts 15 and each of the blade/reed contact 13 form a respective contact socket 11 and contact plug 12 of a fast on electrical coupling, thereby enabling plural breakers 3 to be concurrently connected electrically via the bar 7, which is covered and protected by a sleeve 9 of an electrically insulative material. As shown in figure 1 and 2 the blades extends perpendicularly to the rear wall 8 of the case 6 and the fork contacts 15 are open on the rear side of the breaker, facing the installation rail 5 and the case back wall 8.

Shown in Figure 1 are some modified embodiments of the fork contact 15 mounted on each breaker 3.

In one of these variants, the contact 15 may consist of a slot 16 defined by a gap between a pair of flat portions 17 bent toward each other.

Understandably, where the breakers 3 to be installed in the station 2 are of the two pole-type, they would be each provided with a pair of fork contacts 15.

In that case, each contact 15 would be coupled with a corresponding blade contact 13 from a respective bar 7. To this aim, shown in Figure 3 is an example of a pair of bars 7 laid parallel to each other with their respective contacts 13 aligned and alternating with one another such that each bar allows the corresponding poles of all the breakers to be connected at the same time.

A major advantage of the assembly according to the invention resides in the greatly simplified wiring layout they afford when composing control station and panels.

It may be appreciated that by connecting the electric power supply cables to a single breaker, through the input terminals 10, the power can be supplied to the other breakers in the station through the plug-and-socket fast-on connection provided by the contacts 15 and 13.

Thus, it is unnecessary for the bus bar 7 to be equipped, in turn, with terminals, since by concurrent input of the fork contact 15 and the terminal 10 to each breaker, the ability to connect one or more of electric cables from the electric system to each breaker is retained.

In addition, each breaker will be removable independently of the others by just uncoupling the fork contacts from their mating means of connection to the bar 7, on removing the breaker from the rail 5, of course, the removal occuring with displacement of the breaker in a direction perpendicular to the case back wall 8.

## Claims

1. A circuit breaker assembly intended to facilitate concurrent electrical connection of a plurality of modular automatic circuit breakers (3) installed into a package on a rail (5), with a rear face facing said rail in a supply and protection station (2) for an electric system and being each provided with at least one input and output terminal connector (10) for connection to electric cables of said electric system, characterized in that said assembly comprises a bar (7) made of an electrically conductive material having a plurality of connection plugs (12,13) perpendicular to said bar and to said rear face and a socket (11) in each breaker for receiving one of said plugs, each said socket being electrically connected to one of said input and output terminal connectors and being open on said breaker rear face.

2. An assembly according to Claim 1, characterized in that said socket (11) comprises one fork contact (15) mounted on each breaker (3).

3. An assembly according to Claim 1, characterized in that said plugs (12) are blade contacts (13) formed integrally with and jutting out from said bar (7).

4. An assembly according to Claim 2, characterized in that said at least one fork contact (15) is connected electrically to said at least one input terminal (10).

5. A modular automatic circuit breaker (1) of a type fitting removably on a rail (5), with a rear face facing said rail, by snap action in a supply and protection station (2) for an electric system, characterized in that it comprises the aggregate of at least one input terminal (10), for connection to electric cables of said electric system, and at least one socket electrically connected to said input terminal (15) to provide electrical contact with a contact plug of a rake-like arrangment of plugs, said socket being open in said breaker rear face.

6. A circuit breaker according to Claim 5, characterized in that said socket comprises a fork contact.

## Patentansprüche

1. Eine Stromkreisunterbrecheranordnung zur günstigen Ermöglichung einer zusammenlaufenden elektrischen Verbindung einer Vielzahl von modularen automatischen Stromkreisunterbrechern (3), die in einem Gehäuse auf einer Schiene (5) angebracht sind, wobei eine Unterbrecherrückwand der Schiene in einer Stromversorgungs- und Schutzstation (2) für ein elektrisches System gegenüberliegt und jeder Unterbrecher mit wenigstens einem Eingangs- und Ausgangsanschlußverbindungsglied (10) zur Verbindung an elektrische Kabel des elektrischen Systems versehen ist, dadurch gekennzeichnet, daß die Anordnung eine Leiste (7) aufweist, die aus einem elektrisch leitenden Material gebildet ist und eine Vielzahl von Verbindungssteckern (12,13) aufweist, die senkrecht zu der Leiste und der Rückwand und einer Buchse (11) in jedem Unterbrecher zum Empfangen jeweils eines Steckers verlaufen, wobei jede Buchse elektrisch mit einem der Eingangs- und Ausgangsanschlußverbindungsglieder verbunden ist und auf der Unterbrecherrückwand offen ist.

2. Eine Anordnung nach Anspruch 1, dadurch gekennzeichnet, daß die Buchse (11) einen Gabelkontakt (15) aufweist, der an jedem Unterbrecher (3) angebracht ist.

3. Eine Anordnung nach Anspruch 1, dadurch gekennzeichnet, daß die Stecker (12) Messerkontakte (13) sind, die mit der Leiste (7) integral ausgebildet sind und aus ihr hervorstehen.

4. Eine Anordnung nach Anspruch 2, dadurch gekennzeichnet, daß wenigstens ein Gabelkontakt (15) elektrisch mit wenigstens einem Eingangsanschluß (10) verbunden ist.

5. Ein modularer automatischer Stromkreisunterbrecher (1) von der Art, daß er abnehmbar auf einer Schiene (5) durch eine Schnappwirkung in einer Stromversorgungs- und Schutzstation (2) für ein elektrisches System angepaßt ist, wobei eine Rückwand des Unterbrechers der Schiene gegenüberliegt, dadurch gekennzeichnet, daß er das Aggregat von wenigstens einem Eingangsanschluß (10) zur Verbindung an elektrische Kabel des elektrischen Systems und wenigstens eine Buchse aufweist, die elektrisch mit dem Eingangsanschluß (15) verbunden ist, um einen elektrischen Kontakt mit einem Kontaktstecker einer harkenartigen Anordnung von Steckern zu schaffen, wobei die Buchse in der Unterbrecherrückwand offen ist.

6. Ein Stromkreisunterbrecher nach Anspruch 5, dadurch gekennzeichnet, daß die Buchse einen Gabelkontakt aufweist.

## Revendications

1. Assemblage de disjoncteurs conçu pour faciliter une connexion électrique simultanée de plusieurs disjoncteurs automatiques modulaires (3) installés en un bloc sur un rail (5), une face arrière faisant face audit rail dans un poste (2) d'alimentation et de protection pour un système électrique et pourvus chacun d'au moins un connecteur (10) à bornes d'entrée et de sortie pour une connexion sur des câbles électriques dudit système électrique, caractérisé en ce que ledit assemblage comporte une barre (7) formée d'une matière électriquement conductrice ayant plusieurs fiches (12, 13) de connexion perpendiculaires à ladite barre et à ladite face arrière et une douille (11) dans chaque disjoncteur pour recevoir l'une desdites fiches, chacune desdites douilles étant connectée électriquement à l'un desdits connecteurs à bornes d'entrée et de sortie et étant ouverte sur ladite face arrière du disjoncteur.

2. Assemblage selon la revendication 1, caractérisé en ce que ladite douille (11) comporte un contact (15) à fourche monté sur chaque disjoncteur (3).

3. Assemblage selon la revendication 1, caractérisé en ce que lesdites fiches (12) sont des contacts à couteaux (13) réalisés d'une seule pièce avec ladite barre (7) de laquelle ils font saillie.

4. Assemblage selon la revendication 2, caractérisé en ce que le contact à fourche (15) ou chaque contact à fourche (15) est connecté électriquement à ladite ou à chaque borne d'entrée (10).

5. Disjoncteur automatique modulaire (1) d'un type se montant de façon amovible sur un rail (5), une face arrière étant tournée vers ledit rail, par encliquetage dans un poste (2) d'alimentation et de protection pour un système électrique, caractérisé en ce qu'il comporte l'association d'au moins une borne d'entrée (10), pour une connexion sur les câbles électriques dudit système électrique, et d'au moins une douille connectée électriquement à ladite borne d'entrée (15) pour établir un contact électrique avec une fiche de contact faisant partie d'un agencement de fiches analogue à un râteau, ladite douille étant ouverte dans ladite face arrière du disjoncteur.

6. Disjoncteur selon la revendication 5, caractérisé en ce que ladite douille comporte un contact à fourche.
